# EUROPÄISCHE PATENTSCHRIFT

(11) **EP 2 800 677 B1**
(45) Veröffentlichungstag und Bekanntmachung des Hinweises auf die Patenterteilung: **01.07.2020**
(21) Anmeldenummer: 13716169.1
(22) Anmeldetag: 12.03.2013
(51) Int. Cl.: F21Y 115/10

(54) **STANDARDLICHTQUELLE LASER-DIODE**
STANDARD LIGHT SOURCE LASER DIODE
DIODE LASER SERVANT DE SOURCE DE LUMIÈRE STANDARD

(30) Priorität: 12.03.2012 AT 500732012
(43) Veröffentlichungstag der Anmeldung: 12.11.2014
(60) Teilanmeldung: 15196257.8
(73) Patentinhaber: ZKW Group GmbH, 3250 Wieselburg (AT)
(72) Erfinder: BAUER, Friedrich, A-3252 Bergland (AT); MOSER, Andreas, A-4320 Perg (AT); ALTMANN, Johann, A-3950 Gmünd (AT); KAUFMANN, Erich, A-4020 Linz (AT); JACKL, Christian, A-3244 Ruprechtshofen (AT)
(74) Vertreter: Patentanwaltskanzlei Matschnig & Forsthuber OG
(86) Internationale Anmeldenummer: PCT/AT2013/050064
(87) Internationale Veröffentlichungsnummer: WO 2013/134807

(56) Entgegenhaltungen:
- WO-A1-2006/066530
- WO-A1-2008/000222
- DE-A1-102007 050 924
- DE-A1-102011 007 123
- JP-A- 2012 009 380
- US-A1- 2005 105 301
- US-A1- 2005 134 527
- US-A1- 2011 279 999
- US-A1- 2011 280 032

## Beschreibung

Die Erfindung betrifft ein Lichtquellenmodul für einen Fahrzeugscheinwerfer, wobei das Lichtquellenmodul zumindest eine Laserlichtquelle und zumindest ein durch Beleuchtung mit Laserlicht zur Ausstrahlung von sichtbarem Licht anregbares Leuchtelement, das durch die Laserlichtquelle bestrahlbar ist, aufweist, wobei die Laserlichtquelle und das Leuchtelement zueinander beabstandet auf einem Trägerelement angeordnet sind, wobei das Leuchtelement derart auf dem Trägerelement angeordnet ist, dass es im montierten Zustand in einem Brennpunkt eines Reflektors des Fahrzeugscheinwerfers anordenbar ist.

Im Stand der Technik sind verschiedene Arten von Fahrzeugscheinwerfern bekannt, in die Lichtquellenmodule mit beispielsweise Entladungslampen oder Halogenlichtquellen eingebracht und befestigt werden können. Dazu sind üblicherweise entsprechende Aufnahmen in den Reflektoren oder Reflektoradaptern vorgesehen.

Die heute üblichen Lichtquellenmodule enthalten jeweils eine Lichtquelle und eine Zündvorrichtung, die eine gemeinsame Baugruppe bilden und daher leicht und reproduzierbar montiert bzw. im Fall einer Fehlfunktion einfach getauscht werden können. Dabei ist sichergestellt, dass sich bei Einsetzen eines neuen Lichtquellenmoduls die Lichtquelle wieder an der richtigen Stelle - z.B. hinsichtlich des Reflektors - befindet.

Aus Energiespargründen und um den Platzbedarf von Fahrzeugscheinwerfern zu verringern wird zunehmend der Einsatz von Laserlichtquellen wie Halbleiterlasern erprobt, da diese diesbezüglich von Vorteil sind. Um das Laserlicht für einen Fahrzeugscheinwerfer nutzbar zu machen wird dabei mit einer Laserlichtquelle ein Leuchtelement, ein sog. Phosphor, bestrahlt, der dadurch zur Abstrahlung von sichtbarem Licht angeregt wird. Derartige Lösungen zeigen US 2011/0157865 A1 und US 2011/0280033 A1. Insbesondere zeigt die US 2011/0194302 A1 einen Scheinwerfer bzw. einen Projektor mit einer an einem Gehäuse angeordneten Laserdioden-Lichtquelle und einem Leuchtelement, das entweder unmittelbar auf dem Gehäuse der Leuchtdiode sitzt und in einem Scheinwerfer angeordnet ist oder in Abstand von der Laserdiode unter Zwischenschaltung einer Linse in dem Reflektor eines Projektors angeordnet ist. Dieses Dokument zeigt kein Trägerelement zur lösbaren Montage. Die Laserdiode scheint vielmehr zum Einlöten in der Anordnung bestimmt.

Das Dokument WO 2006/066530 A1 zeigt ein mehrere LEDs enthaltendes Modul für einen Fahrzeugscheinwerfer und besitzt einen Kühlkörper, der mit einem Bajonettverschluss mit Verriegelungseinrichtungen in einem Fahrzeugscheinwerfer einsetzbar ist.

Das Dokument JP 2012-009380 A zeigt eine Lichteinheit, bei welcher ein Laserdioden-Chip, ein Lichtkondensor und ein Leuchtelement fest miteinander verbunden sind und einen Block bilden, der unter anderem auch in einen Scheinwerfer eingesetzt werden kann. US 2011/0.280.032 offenbart ein Lichtquellenmodul gemäß dem Oberbegriff des Anspruchs 1.

Bei Leuchteinheiten, welche einen Laser und ein Leuchtelement samt einer allfälligen Laserlichtführung aufweisen, treten verschiedene, zum Teil nicht oder nur mangelhaft gelöste Probleme auf, wobei besonders zu erwähnen wären: effiziente Kühlung von Laser und Phosphor, Austauschbarkeit einer in einem Scheinwerfer sitzenden Leuchteinheit, korrektes Justieren der Leuchteinheit in einem Scheinwerfer, korrektes Justieren des Lasers bezüglich des Phosphors.

Es ist daher eine Aufgabe der Erfindung, ein Lichtquellenmodul bereit zu stellen, das mit einer Laserlichtquelle betrieben werden kann und welches hinsichtlich der Lösung der oben genannten Probleme eine Verbesserung darstellt.

Diese Aufgabe wird mit einem eingangs erwähnten Lichtquellenmodul erfindungsgemäß dadurch gelöst, dass das Lichtquellenmodul an dem Trägerelement angeordnete Mittel zur lösbaren Montage in dem Fahrzeugscheinwerfer aufweist und das Trägerelement zumindest eine Trägerbasis mit zumindest einer Laserlichtquelle und zumindest einen von der Trägerbasis ausgehenden Trägerarm mit zumindest einem Leuchtelement aufweist, und der Trägerarm von der Trägerbasis ausgehend U-förmig ausgeführt ist, wobei das zumindest eine Leuchtelement an der von der Trägerbasis am weitesten entfernten Stelle auf der der Laserlichtquelle zugewandten Seite des Trägerarms angeordnet ist.

Das erfindungsgemäße Lichtquellenmodul ermöglicht bei optimaler Ausnutzung des vom Leuchtelement ausgestrahlten Lichts eine standardisierte Laserlichtquelle für Fahrzeugscheinwerfer, wobei durch die gemeinsame Anordnung von Laserlichtquelle und Leuchtelement auf einem Trägerelement die Positioniergenauigkeit zwischen Laserlichtquelle und Leuchtelement sichergestellt ist. Das Lichtquellenmodul kann wie herkömmliche Module in Richtung der optischen Achse eines Fahrzeugscheinwerfers bzw. dessen Reflektors von hinten eingefügt werden. Dadurch ist auch ein leichter Einbau bzw. Austausch möglich, wobei dabei die reproduzierbare Positionierung insbesondere des Leuchtelements innerhalb des Fahrzeugscheinwerfers sichergestellt ist. Diese Austauschbarkeit ergibt eine ressourcenschonende, wirtschaftliche Handlungsmöglichkeit, zumal im Falle eines Defekts nicht der gesamte Scheinwerfer, sondern lediglich das Lichtquellenmodul ausgetauscht werden muss. Auch können so routinemäßige Kontrollen, z.B. des Phosphors, einfacher durchgeführt werden. Der Aufbau des Moduls erleichtert in besonderem Maß die Kühlung, sowohl der Laserlichtquelle als auch des Leuchtelements. Durch die U-förmige Ausführung ist der Bereich, in dem der Laserlichtstrahl verläuft, abgeschirmt.

Vorteilhafterweise umfassen die Mittel zur lösbaren Montage Referenzmittel zum Referenzieren des Lichtquellenmoduls und/oder der Laserlichtquelle in einem Fahrzeugscheinwerfer, insbesondere einem Reflektor eines Fahrzeugscheinwerfers. Damit kann sichergestellt werden, dass beim Verbauen des Lichtquellenmoduls in einen Scheinwerfer die optimale Positionierung des Moduls bzw. dessen Leuchtelements reproduzierbar ist.

In einer Variante der Erfindung sind die Referenzmittel als mit entsprechenden Führungsaufnahmevorrichtungen eines Fahrzeugscheinwerfers, insbesondere eines Reflektors eines Fahrzeugscheinwerfers, zusammenwirkende Führungsvorrichtungen ausgeführt.

In einer weiteren Variante der Erfindung sind die Referenzmittel als auf der Laserlichtquelle und/oder dem Trägerelement ausgeführte Referenzebene mit zumindest drei Auflageflächen ausgeführt, die mit entsprechenden Auflageflächenaufnahmen am Fahrzeugscheinwerfer, insbesondere am Reflektor eines Fahrzeugscheinwerfers, zusammenwirken.

In noch einer weiteren Variante der Erfindung sind die Referenzmittel als zumindest ein Passstift und zumindest ein Passloch ausgeführt, wobei der Passstift auf der Laserlichtquelle und/oder dem Trägerelement angeordnet sind und das Passloch auf einem Fahrzeugscheinwerfer angeordnet ist, oder umgekehrt.

Das Trägerelement kann beliebig ausgeführt sein, beispielsweise aus Kunststoff. Günstigerweise ist das Trägerelement aus einem wärmeleitenden Material und/oder zumindest teilweise aus einem transparenten Material gefertigt. Dabei können verschiedene gebräuchliche Materialien verwendet werden, beispielsweise kann das Trägerelement in "Alu-Druckguß" oder als ein eine Heatpipe umfassender Kühlkörper bekannter Art realisiert werden. Möglich sind auch verschiedene Metalle, metallische Legierungen oder anthrazit-bzw. graphithältige Polymere. Das Material bzw. die Ausführung ist so zu wählen, dass ein Wärmeabtransport vom Leuchtelement weg gewährleistet ist.

Als Laserlichtquelle können beispielsweise Halbleiterlaser bzw. Laserdioden bekannter Art verwendet werden, wobei die Wellenlänge des abgestrahlten Lichts im Bereich von 200 nm bis 450 nm liegt. Beispielsweise kann es sich auch um ein Lichtquellenarray mit mehreren Lichtquellen, insbesondere Laserdioden, handeln. Dabei kann eine Farbabstimmung zwischen den verschiedenen Lichtquellen vorgesehen werden. Bei dem Lichtelement handelt es sich beispielsweise um einen beliebigen Phosphor-Konverter, wobei allen diesen Materialien gemein ist, dass sie mit Laserlicht zur Emission von sichtbarem Licht insbesondere weißer Farbe anregbar sind.

Über das Trägerelement kann so die während des Betriebs der Laserlichtquelle bzw. des Leuchtelements entstehende Wärme abgeleitet werden. Die Abwärme kann dabei durchaus beträchtlich sein, da Laserlichtquellen mit Leistungen von derzeit bis zu 3 W verwendet werden, wobei ein Teil der Leistung in Form von Wärme abgegeben wird. Die Wärmeableitung ist von Vorteil, da die Abstrahlungscharakteristik einer Laserdiode, wie sie hier zum Einsatz kommt, im Gegensatz zu LEDs stark von der Temperatur abhängig ist.

Bei Ausführung des Trägerelements zumindest teilweise aus einem transparenten Material kann in Kombination mit im Trägerelement oder an dessen Oberfläche ausgeführten Unregelmäßigkeiten (Mikrostrukturen, Materialeinschlüsse, o.ä.) das eingestrahlte Laserlicht oder das vom Leuchtelement stammende Licht abgelenkt und damit sichtbar gemacht werden. Laser-Licht, welches unkollimiert die Laserlichtquelle verlässt, wird im transparenten Teil des Trägerelements gestreut und gespiegelt, damit das Licht außerhalb des Fahrzeugscheinwerfers wahrgenommen werden kann. Beispielsweise kann so bei Verwendung einer blauen Laserlichtquelle ein die Augen nicht gefährdendes blaues Leuchten erzeugt werden, das als Designelement eingesetzt werden kann.

Vorteilhafterweise ist auf der von der Laserlichtquelle abgewandten Seite des Leuchtelements ein auf dem Trägerelement angeordnetes Konzentratoroptikelement vorgesehen, welches das Leuchtelement im montierten Zustand in Hauptabstrahlrichtung des Fahrzeugscheinwerfers abschirmt und/oder auf seiner dem Leuchtelement zugewandten Seite eine Reflexionsschicht aufweist. Das Konzentratoroptikelement kann dabei beispielsweise aus Glas gefertigt sein, das auf seiner von der Laserlichtquelle abgewandten Seite mit einer lichtundurchlässigen Beschichtung versehen ist.

Das Konzentratoroptikelement kann weiters aus Kunststoff oder Metall gefertigt sein, die bevorzugt lichtundurchlässig sind. Dadurch wird verhindert, dass das vom Leuchtelement emittierte Licht unkontrolliert in Hauptabstrahlrichtung den Fahrzeugscheinwerfer verlässt und derart das Lichtbild beeinträchtigt. Außerdem dient das Konzentratoroptikelement gemäß dieser Variante als Sicherheitsvorkehrung: Es schirmt als Abdeckkappe das Laserlicht gegen die Umgebung ab und verhindert dessen Austritt und damit die Gefährdung unbeteiligter Verkehrsteilnehmer. Bei Vorsehen einer dem Leuchtelement zugewandten Reflexionsschicht wird das vom Leuchtelement allseitig (insbesondere in von der Laserlichtquelle wegführender Richtung) emittierte Licht nutzbar gemacht und gleichzeitig optisch vorgeformt - das Konzentratoroptikelement fungiert damit als Reflektor.

In einer Variante der Erfindung ist das Leuchtelement in einem auf dem Trägerelement angeordnetem Optikelement, bevorzugt in einem Sackloch oder in einer Höhlung, angeordnet, wobei dem Optikelement zumindest auf einer von der Laserlichtquelle abgewandten Seite zumindest eine, Licht in Richtung der Laserlichtquelle reflektierende Reflexionsschicht und/oder zumindest eine lichtundurchlässige Absorptionsschicht zugeordnet ist. Die Reflexionsschicht und/oder die lichtundurchlässige Absorptionsschicht sind bevorzugt direkt auf dem Optikelement angebracht. Das Optikelement weist also eine Aufnahme für das Leuchtelement und eine Reflexionsschicht und/oder Absorptionsschicht in einem gemeinsamen Bauteil auf.

Neben der Ausführung als Sackloch kann die Ausnehmung auch als Höhlung, also allseitig vom Optikelement umschlossen, ausgeführt sein. Dadurch wird das Leuchtelement vor Umgebungseinflüssen geschützt. Das Optikelement kann beispielsweise aus Glas oder transparentem Kunststoff ausgeführt sein, damit das Licht der Laserlichtquelle auf das Leuchtelement treffen kann. Bei Vorsehen einer lichtundurchlässigen Beschichtung wirkt das Optikelement (genauso wie das Konzentratoroptikelement) als Abdeckkappe für das Laserlicht und das vom Leuchtelement ausgestrahlte Licht. Diese lichtundurchlässige Beschichtung kann beispielsweise auch für Designzwecke verwendet werden, z.B. um Herstellerlogos zu platzieren.

In einer weiteren Variante der Erfindung ist die der Laserlichtquelle zugewandte Seite des Optikelements zumindest teilweise, insbesondere aber in einem Bereich unter einer durch das Leuchtelement verlaufenden Horizontalebene, von einer lichtundurchlässigen Blendenvorrichtung, beispielsweise in Form einer lichtundurchlässigen Beschichtung, bedeckt. Die Blendenvorrichtung erlaubt die Erzeugung eines Hell-Dunkel-Übergangs, wodurch sich verschiedene Lichtfunktionen wie Abblendlicht, Nebellicht etc. realisieren lassen. Im Falle eines Abblendlichts ist es beispielsweise notwendig, dass das Leuchtelement scharf geometrisch und lichttechnisch abgegrenzt ist. Diesem Zweck dient die oben genannte Blendenvorrichtung, die beispielsweise als Lackierung, Bedampfung oder separates Bauteil ausgeführt ist. Die Blendenvorrichtung bewirkt zusammen mit entsprechend gestalteten Reflexionsbereichen, dass die im Optikelement reflektierte Lichtausstrahlung oberhalb des Leuchtelements austritt und damit für den Fahrzeugscheinwerfer nutzbar ist.

Grundsätzlich ist die genannte Erfindung als Freistrahlkonzept umgesetzt, die Laserlichtquelle strahlt also direkt auf das Leuchtelement. In einer Variante der Erfindung ist zwischen der Laserlichtquelle und dem Leuchtelement zumindest ein Lichtleitelement angeordnet. Dieses Lichtleitelement besteht dabei aus einem lichtleitenden Material, beispielsweise Kunststoff (z.B. Plexiglas), und kann beliebig ausgeformt sein, beispielsweise röhren-, kegel- oder zylinderförmig. Auch eine Ausführung als trichterförmiges Konzentratorelement, beispielsweise aus Glas, ist möglich. Das Lichtleitelement kann auch mit Unregelmäßigkeiten (Mikrostrukturen, Aufrauhungen an der Oberfläche, Streukörper im Inneren, etc.) versehen sein, die das Laserlicht ablenken und so ein Leuchten des Lichtleitelements bewirken, was als Designelement verwendbar ist. Beispielsweise kann bei Verwendung einer blauen Laserlichtquelle derart ein blaues Leuchten erzeugt werden.

Um die beim Betrieb der Laserlichtquelle entstehende Abwärme abzuleiten, ist vorteilhafterweise die Laserlichtquelle mit zumindest einem Kühlelement verbunden, das insbesondere als Kühlkörper und/oder Belüftungsvorrichtung ausgeführt ist. Günstigerweise ist das mit der Laserlichtquelle verbundene Kühlelement auf dem Trägerelement angeordnet. Das Kühlelement kann beispielsweise als Wasserkühlung, Ventilatoreinheit oder Heatpipe ausgeführt sein, möglich ist aber auch eine Ausführung beispielsweise mit Kühlrippen. In einer Variante ist das Trägerelement wie oben beschrieben wärmeleitend ausgeführt, so dass in Kombination mit dem gerade beschriebenen Kühlelement eine besonders effiziente Ableitung der durch das Lichtquellenmodul produzierten Abwärme sichergestellt ist.

Fehlfunktionen des Lichtquellenmoduls, beispielsweise der Laserlichtquelle, können neben Nachteilen für den Betrieb auch zu einer Gefährdung anderer Verkehrsteilnehmer führen. Daher ist in einer Variante der Erfindung auf dem Trägerelement zumindest ein Sensorelement zur Erkennung einer Fehlfunktion der Laserlichtquelle und/oder der Trägerelements angeordnet. Bei dem Sensorelement kann es sich um zumindest eine der folgenden Sensorvorrichtungen handeln: optischer Sensor zur Detektion einer Abweichung des von der Laserlichtquelle ausgestrahlten Laserlichts von der ordnungsgemäßen Strahlrichtung; optischer Sensor zur Detektion von Fehlfunktionen des Leuchtelements; mechanischer Sensor zur Detektion einer Beschädigung des Trägerelements und/oder des Leuchtelements und/oder des Optikelements und/oder des Konzentratoroptikelements.

Vorteilhafterweise weist das Trägerelement in dem Bereich um das Leuchtelement einen Absorberbereich mit einer absorbierenden bzw. nicht-reflektierenden Oberfläche auf. Damit kann eine zusätzliche Sicherheitsfunktion realisiert werden, da bei einer Fehlfunktion-wenn sich beispielsweise die Orientierung der Laserlichtquelle aufgrund einer Verstellung der Quelle oder womöglich eines Bruchs des Trägerelements verändert - bei Auftreffen des Laserstrahls abseits des Leuchtelements das Licht absorbiert und nicht unkontrolliert reflektiert wird. Eine derartige absorbierende bzw. nicht-reflektierende Oberfläche wird dazu günstigerweise in dem Bereich, in dem das Laserlicht bei Fehlfunktionen auftreffen kann, bzw. im Nahbereich des Leuchtelements realisiert.

In einer Variante der Erfindung weist das Lichtquellenmodul zumindest eine Sicherheitsschaltvorrichtung auf, die ein Aktivieren des Lichtquellenmoduls bzw. der Laserlichtquelle des Lichtquellenmoduls vor erfolgtem Einbau des Lichtquellenmoduls in einen Fahrzeugscheinwerfer unterbindet. Dabei kann es sich beispielsweise um einen Kontaktschalter handeln, der die Inbetriebnahme der Laserlichtquelle erst in korrekter Position im Fahrzeugscheinwerfer bzw. im Reflektor eines Fahrzeugscheinwerfers freigibt. Eine weitere Möglichkeit sind ein Kodier-Widerstand oder eine Brücke welche im Kabelstrang oder in die lichttechnische Einheit integriert sein kann (mechanisch und/oder elektronisch) und die Inbetriebnahme erst freigibt, wenn der Scheinwerfer oder das Lichtmodul im Fahrzeug verbaut sind.

Die Aufgabe der Erfindung wird weiters durch einen eingangs erwähnten Fahrzeugscheinwerfer mit zumindest einem Lichtquellenmodul nach einer der oben beschriebenen Varianten gelöst. In einer Variante der Erfindung ist zumindest ein Reflektor oder Reflektoradapter mit zumindest einer Aufnahme für das Lichtquellenmodul vorgesehen. Der derart ausgeführte Fahrzeugscheinwerfer ist dazu geeignet, die gesetzlichen Bestimmungen der ECE, SAE, CCC, usw. zu erfüllen.

Im Folgenden wird die Offenbarung anhand eines nicht einschränkenden Ausführungsbeispiels, das in der Zeichnung dargestellt ist, näher erläutert. In dieser zeigt schematisch:
Fig. 1 eine Seitenansicht einer ersten Variante eines Lichtquellenmoduls;
Fig. 2 eine Seitenansicht einer zweiten Variante eines Lichtquellenmoduls;
Fig. 3 eine Seitenansicht eines erfindungsgemäßen Lichtquellenmoduls;
Fig. 4 perspektivische Ansicht von schräg vorne einer vierten Variante des erfindungsgemäßen Lichtquellenmoduls;
Fig. 5 eine perspektivische Ansicht von schräg hinten der Variante aus Fig. 4;
Fig. 6 eine seitliche Schnittansicht eines Fahrzeugscheinwerfers mit einem Lichtquellenmodul gemäß Fig. 1; und
Fig. 7 eine perspektivische Ansicht von schräg vorne eines Fahrzeugscheinwerfers mit einem Lichtquellenmodul gemäß Fig. 4.

Aus Gründen der Übersichtlichkeit sind gleiche Elemente in den verschiedenen Figuren jeweils mit demselben Bezugszeichen bezeichnet.

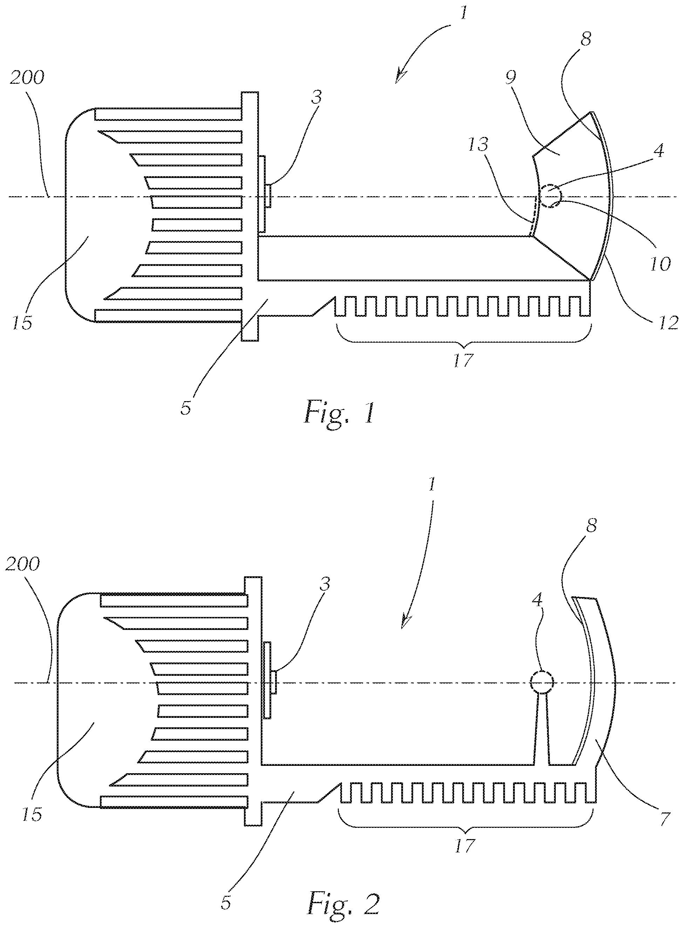

Fig. 1 zeigt eine erste Variante eines Lichtquellenmoduls 1, wobei eine Laserlichtquelle 3 und ein beabstandet angeordnetes Leuchtelement 4, das in einem Optikelement 9 gehalten ist, auf einem Trägerelement 5 angeordnet sind. Bei der Laserlichtquelle 3 handelt es sich beispielsweise um einen Halbleiterlaser in Form einer Laserdiode bzw. um ein Lichtquellenarray mit mehreren Laserdioden inkl. der notwendigen Ansteuerelektronik und Verkabelung. Beim Vorsehen mehrerer Laserlichtquellen können diese beispielsweise farbabgestimmt sein.

Das Trägerelement 5 ist aus einem wärmeleitenden Material bekannter Art gefertigt (z.B. als Kühlkörper, umfassend eine Heatpipe), führt also die beim Betrieb von Laserlichtquelle 3 und Leuchtelement 4 entstehende Wärme ab. Das Trägerelement 5 kann beispielsweise in "Alu-Druckguß" oder als eine Heatpipe umfassender Kühlkörper bekannter Art realisiert werden. Möglich sind auch verschiedene Metalle, metallische Legierungen oder anthrazit- bzw. graphithältige Polymere. Möglich ist auch eine Variante, bei der das Trägerelement 5 aus Glasmaterial ausgeformt ist und eingebettete Metallbänder (z.B. Kupfer) zur Wärmeleitung enthält.

Zur Unterstützung sind auf der Unterseite des Trägerelements 5 in der Umgebung des Leuchtelements 4 Kühlrippen 17 vorgesehen. Das Trägerelement 5 kann teilweise aus transparentem Material gefertigt sein, das Unregelmäßigkeiten wie Mikrostrukturen, Aufrauhungen oder Streukörper in seinem Inneren aufweist. Dadurch wird Licht, das die Laserlichtquelle 3 oder das Leuchtelement 4 verlässt, gespiegelt und gestreut und so von außen sichtbar gemacht, was als Designelement verwendet werden kann.

Zur Wärmeabführung ist die Laserlichtquelle 3 mit einem Kühlelement 15 verbunden. Das Kühlelement 15 dient zur zusätzlichen Abführung der beim Betrieb der Laserlichtquelle 3 entstehenden Wärme. Das Kühlelement 15 ist auf dem Trägerelement 5 angeordnet, bzw. mit diesem verbunden. Durch die einstückige Ausführung von Kühlelement 15 und Trägerelement 5 ist eine optimale Wärmeübertragung gegeben. Das Kühlelement 15 ist als Kühlkörper oder als Belüftungsvorrichtung ausgeführt, dient also entweder rein zum Abführen von Wärme, beispielsweise durch Oberflächenvergrößerung mittels Kühlrippen, oder es wird der Laserlichtquelle 3 aktiv ein Kühlmedium zugeführt, beispielsweise durch Wasserkühlung oder einen Ventilator.

Das Leuchtelement 4 ist kugelförmig ausgeführt; es handelt sich um einen Phosphor-Konverter, der durch Bestrahlung mit Laserlicht zur Abstrahlung von sichtbarem, bevorzugt weißem Licht angeregt wird. Das Leuchtelement 4 spendet also funktionsgemäß weißes Licht. Die kugelförmige Ausführung ist nur eine von mehreren Varianten, das Leuchtelement 4 zu gestalten.

Das Optikelement 9 ist aus einem überwiegend transparenten Material wie Glas oder Kunststoff ausgeführt und weist eine Aufnahme für das Leuchtelements 4 auf, beispielsweise ein Sackloch 10 oder eine allseitig von dem Optikelement 9 umschlossene Höhlung. Dadurch ist das Leuchtelement 4 gegen Umwelteinflüsse geschützt.

Dem Leuchtelement 4 ist auf einer von der Laserlichtquelle 3 abgewandten Seite zumindest eine reflektierende Reflexionsschicht 8 zugeordnet. Die Reflexionsschicht 8 ist auf der von der Laserlichtquelle 3 abgewandten Seite des Optikelements 9 als Beschichtung ausgeführt. Die Beschichtung erfolgt beispielsweise durch Aufdampfen, Lackieren oder Befestigen eines separaten Reflexionselements. Die Reflexionsschicht 8 reflektiert Licht in Richtung der Laserlichtquelle 3. Damit wird vom Leuchtelement 4 in von der Laserlichtquelle abgewandter Richtung ausgestrahltes Licht nutzbar gemacht und gleichzeitig optisch vorgeformt. Auf der Reflexionsschicht 8 ist des Weiteren eine lichtundurchlässige Absorptionsschicht 12 aufgebracht. Diese Absorptionsschicht 12 dient als Schutz, um bei Durchstrahlen der Reflexionsschicht 8 (z.B., wenn diese produktionsbedingt an manchen Stellen zu dünn ausgeführt ist) ein Austreten von Laserstrahlung oder von weißem Licht zu verhindern. In einer Variante kann auch nur eine Absorptionsschicht 12 vorgesehen sein - in diesem Fall wird das Licht nicht optisch vorgeformt und in Richtung der Laserlichtquelle 3 reflektiert, sondern nur abgeschirmt.

Je nach Ausführung der von der Laserlichtquelle 3 abgewandten Seite des Optikelements 9 und der Reflexionsschicht 8 können verschiedene Lichtfunktionen realisiert werden. Beispielsweise kann die von der Laserlichtquelle 3 abgewandte Seite des Optikelements 9 (also die Außenfläche) derart ausgeführt sein, dass sie zumindest einen Brennpunkt aufweist und die als Sackloch 10 ausgeführte Aufnahme so angeordnet ist, dass das Leuchtelement 4 bei Einbringung in die Aufnahme in einem dieser Brennpunkte bzw. in dessen Nähe zu liegen kommt. Dazu ist besagte Außenfläche des Optikelements 9 (und damit auch die Reflexionsschicht 8) bevorzugt als Freiformfläche ausgeführt. Das Ausführen einer Freiformfläche ist dem Fachmann bekannt.

In einer Variante ist die Außenfläche und damit die darauf aufgebrachte Reflexionsschicht 9 so ausgeführt, dass Licht oberhalb, unterhalb und seitlich im Umkreis des Leuchtelements 4 reflektiert wird und derart quasi zu einer Vergrößerung der Lichtquelle bzw. des Leuchtelements 4 beiträgt - das Leuchtelement 4 ist in dieser Variante quasi von einem Lichtring an reflektiertem Licht umgeben. Die Reflexionsschicht 8 leitet also das von ihr reflektierte Licht überwiegend am Leuchtelement vorbei.

Eine Variante ist strichliert in Fig. 1 dargestellt: Auf der der Laserlichtquelle 3 zugewandten Seite des Optikelements 9 ist eine lichtundurchlässige Blendenvorrichtung 13 angeordnet. Diese Blendenvorrichtung 13 ist in Fig. 1 strichliert eingezeichnet. Im dargestellten Ausführungsbeispiel ist die Blendenvorrichtung 13 in einem Bereich unter einer durch das Leuchtelement 4 verlaufenden Horizontalebene 200 angeordnet. Die Horizontalebene 200 verläuft in Fig. 1 normal zur Zeichenebene und ist als strichpunktierte Linie eingezeichnet. Selbstverständlich sind je nach gewünschter Lichtfunktion auch andere Ausführungen möglich.

Die Blendenvorrichtung 13 kann beliebig ausgeführt sein, beispielsweise als lichtundurchlässige Beschichtung oder als separate Blende, die aufgeklebt oder auf eine andere Weise auf das Optikelement 9 aufgebracht bzw. an diesem mechanisch gehalten wird. Die Blendenvorrichtung 13 erlaubt die Erzeugung eines Hell-Dunkel-Übergangs, wodurch sich verschiedene Lichtfunktionen wie Abblendlicht, Nebellicht etc. realisieren lassen.

Eine weitere Variante des Lichtquellenmoduls 1 ist in Fig. 2 dargestellt. Darin ist anstatt des Optikelements 9 aus Fig. 1 ein auf dem Trägerelement 5 angeordnetes und mit diesem verbundenes Konzentratoroptikelement 7 vorgesehen, das auf der von der Laserlichtquelle 3 abgewandten Seite des Leuchtelements 4 angeordnet ist. Das Leuchtelement 4 ist über eine nicht näher definierte Halterung positioniert, eventuell umgeben von einer Kapselung, die das Leuchtelement 4 vor Umwelteinflüssen schützt.

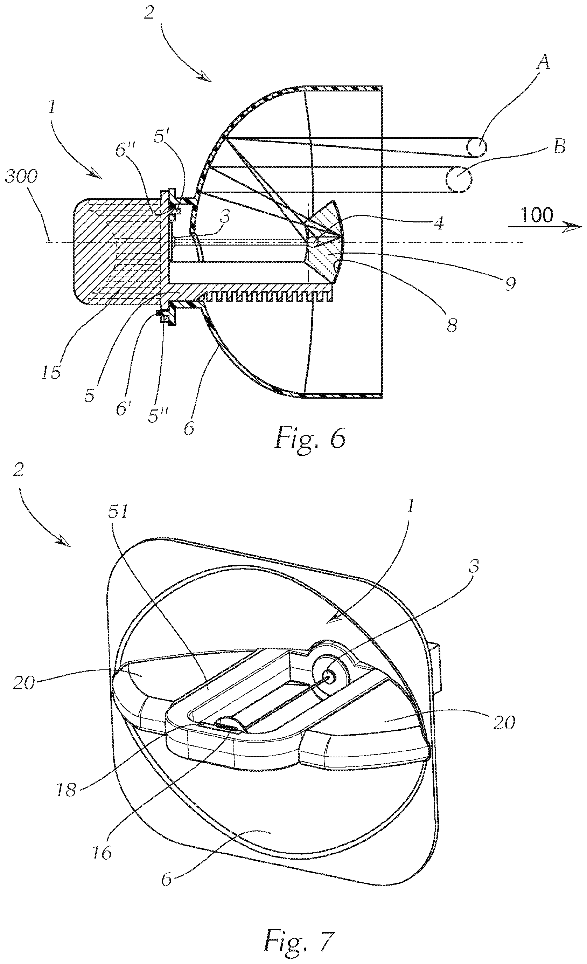

Das Konzentratoroptikelement 7 dient einerseits dazu, das Leuchtelement im montierten Zustand, wenn das Lichtquellenmodul 1 beispielsweise in einen Fahrzeugscheinwerfer 2 verbaut ist, in Hauptabstrahlrichtung 100 des Fahrzeugscheinwerfers 2 (siehe Fig. 6 oder 7) abzuschirmen. Auf der dem Leuchtelement 4 zugewandten Seite des Konzentratoroptikelements 7 ist des Weiteren eine Reflexionsschicht 8 angeordnet, die das Licht in Richtung der Laserlichtquelle 3 zurückwirft und optisch vorformt. Zur optischen Vorformung kann die Oberfläche des Konzentratoroptikelements 7 ebenfalls derart ausgeführt sein, dass sie zumindest einen Brennpunkt hat, wobei das Leuchtelement 4 bevorzugt in diesem Brennpunkt angeordnet ist. Dazu kann die Oberfläche als Freiformfläche bekannter Art ausgeführt sein. Das Konzentratoroptikelement 7 kann beispielsweise aus Glas oder Kunststoff gefertigt sein - eventuell ist dann zusätzlich zu der Reflexionsschicht 8 eine Absorptionsschicht 12 vorzusehen, um eine Durchstrahlen des Konzentratoroptikelements 7 zu verhindern. Günstigerweise ist das Konzentratoroptikelement 7 aus einem lichtundurchlässigen Material wie Metall oder Kunststoff gefertigt, kann aber in einer Variante auch einstückig mit dem Trägerelement 5 gefertigt sein. Diese Variante ist in Fig. 2 dargestellt.

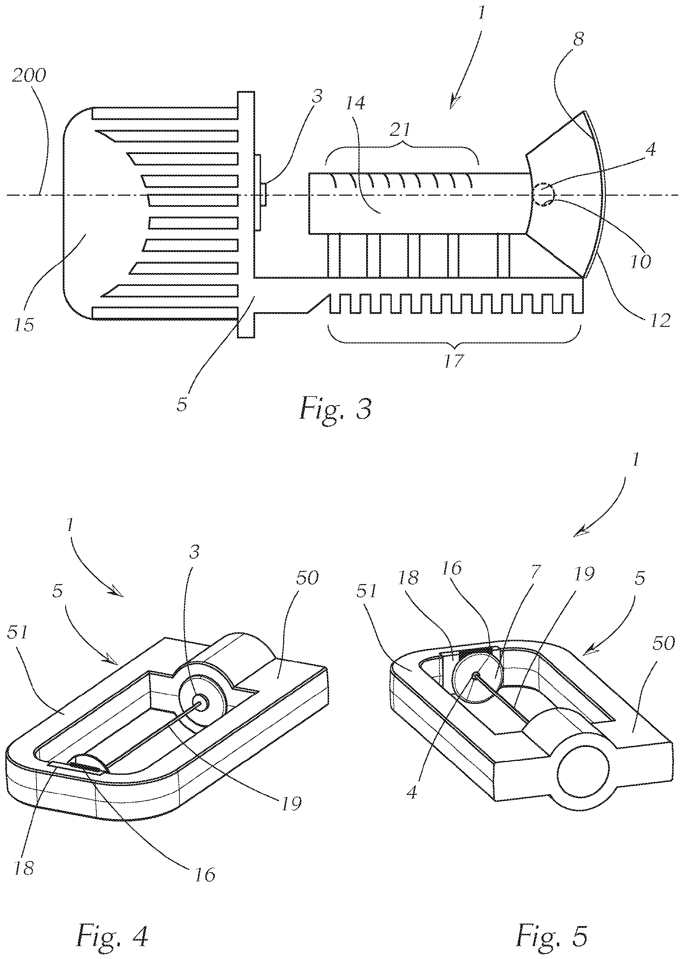

Fig. 3 zeigt eine Variante in der zwischen der Laserlichtquelle 3 und dem Leuchtelement 4, das hier ebenfalls in einem Optikelement 9 angeordnet ist, ein Lichtleitelement 14 angeordnet ist. Dies stellt eine Alternative zu dem Freistrahlkonzept aus den Fig. 1 und 2 dar - das Laserlicht wird in dem Lichtleitelement 14 von der Laserlichtquelle 3 zum Leuchtelement 4 geführt. Das Lichtleitelement 14 besteht aus einem lichtleitendem Material, beispielsweise Kunststoff oder Plexiglas, und kann beliebig ausgeformt sein, beispielsweise röhren-, halbröhren- (in Form einer Halfpipe), kegel- oder zylinderförmig. Auch eine Ausführung als trichterförmiges Konzentratorelement, beispielsweise aus Glas, ist möglich.

In bzw. auf dem Lichtleitelement 14 können Unregelmäßigkeiten wie Mikrostrukturen oder Störkörper im Elementinneren vorgesehen sein, die das Laserlicht streuen und so von außen sichtbar machen. Beispielhaft zeigt Fig. 3 Wellenstrukturen 21 auf der Oberseite des Lichtleitelements 14. Je nach geplantem Einsatzgebiet kann das Lichtquellenmodul so gestalterisch bzw. als Designelement verwendet werden. Beispielsweise kann bei Verwendung einer zusätzlichen färbigen, beispielsweise blauen, Laserlichtquelle oder LED, die auf die Mikrostrukturen gerichtet ist, ein blaues Leuchten erzeugt werden.

Die Fign. 4 und 5 zeigen in perspektivischer Ansicht ein erfindungsgemäßes Lichtquellenmodul 1. Darin ist ebenfalls wieder ein Leuchtelement 4 mit einer darauf gerichteten Laserlichtquelle 3 dargestellt. Der Laserstrahl 19 zwischen Laserlichtquelle 3 und Leuchtelement 4 ist skizziert.

In dieser Variante besteht das Trägerelement 5 aus einer Trägerbasis 50, in der die Laserlichtquelle 3 angeordnet ist, und einem von der Trägerbasis 50 ausgehenden Trägerarm 51 mit dem Leuchtelement 4. Der Trägerarm ist gemäß dem dargestellten Ausführungsbeispiel von der Trägerbasis 50 ausgehend U-förmig ausgeführt. Das Leuchtelement 4 befindet sich an der von der Trägerbasis 50 am weitesten entfernten Stelle auf der der Laserlichtquelle 3 zugewandten Seite des Trägerarms 51.

Das Leuchtelement 4 ist in einem Konzentratoroptikelement 7 ähnlich Fig. 2 angeordnet. Im Bereich rund um das Leuchtelement 4 (in Fig. 4 nicht sichtbar) weist das Trägerelement 5 einen Absorberbereich 18 auf, der eine absorbierende bzw. nicht-reflektierende Oberfläche aufweist. Dieser Absorberbereich 18 dient der Sicherheit: Wenn es aus nicht näher definierten Gründen zu einer Fehlfunktion des Lichtquellenmoduls 1 kommt - wenn also beispielsweise das Leuchtelement 4 zerstört oder entfernt wird oder das Konzentratoroptikelement 7 bricht - trifft der Laserstrahl 19 aus der Laserlichtquelle 3 nicht auf eine reflektierende Fläche oder wird direkt in die Umgebung des Lichtquellenmoduls 1 bzw. des Fahrzeugscheinwerfers 2 (siehe Fig. 6 und 7) abgelenkt, sondern trifft auf den Absorberbereich 18 und wird dort absorbiert.

Daneben sind noch weitere Sicherheitsvorkehrungen möglich: Auf dem Trägerelement 5 können Sensorelemente zur Erkennung einer Fehlfunktion der Laserlichtquelle 3 und/oder des Trägerelements 5 angeordnet sein. Fehlfunktionen sind beispielsweise oben beschriebene Defekte der Laserlichtquelle 3 bzw. des Leuchtelements 4 oder ein Bruch des Trägerelements 5 aufgrund mechanischer Einwirkung. Im Fall einer erkannten Fehlfunktion kann dann eine Abschaltung der Laserlichtquelle 3 erfolgen. Die Aufzeichnungen der Sensorelemente sind also entsprechend auszuwerten bzw. in das Fahrzeug-Sicherheitssystem einzuspeisen.

Bei besagten Sensorelementen kann es sich demzufolge beispielsweise um einen optischen Sensor zur Detektion einer Abweichung des von der Laserlichtquelle 3 ausgestrahlten Laserlichts von der ordnungsgemäßen Strahlrichtung, um einen optischen Sensor zur Detektion von Fehlfunktionen des Leuchtelements 4 oder um einen mechanischen Sensor zur Detektion einer Beschädigung des Trägerelements 5 und/oder des Leuchtelements 4 und/oder des Optikelements 9 bzw. des Konzentratoroptikelements 7 handeln. Beispielhaft ist in Fign. 4 und 5 ein Optiksensor 16 zur Überwachung des Laserstrahls 19 eingezeichnet. Bei dem Optiksensor 16 kann es sich beispielsweise um eine Fotozelle handeln. Der Optiksensor 16 ist im dargestellten Ausführungsbeispiel so hinter dem Konzentratoroptikelement 7 positioniert, dass er dann vom Laserstrahl 19 getroffen wird, wenn das Konzentratoroptikelement 7 bricht. Wie oben erwähnt ist auch eine Vielzahl von anderen Ausführungen möglich.

Als zusätzliche Sicherheitsvorkehrung kann das Lichtquellenmodul 1 zumindest eine Sicherheitsschaltvorrichtung aufweisen, die ein Aktivieren des Lichtquellenmoduls 1 bzw. der Laserlichtquelle 3 des Lichtquellenmoduls 1 vor erfolgtem Einbau des Lichtquellenmoduls 1 in einen Fahrzeugscheinwerfer 2 bzw. einen Reflektor 6 oder Reflektoradapter eines Fahrzeugscheinwerfers 2 verhindert. Dabei kann es sich beispielsweise um einen Kontaktschalter handeln, der die Inbetriebnahme der Laserlichtquelle 3 erst in korrekter Position im Fahrzeugscheinwerfer 2 bzw. im Reflektor 6 eines Fahrzeugscheinwerfers freigibt. Eine weitere Möglichkeit sind ein Kodier-Widerstand oder eine Brücke welche im Kabelstrang oder in die lichttechnische Einheit integriert sein kann (mechanisch und/oder elektronisch) und die Inbetriebnahme erst freigibt, wenn der Fahrzeugscheinwerfer 2 oder das Lichtmodul 1 im Fahrzeug verbaut sind. Derartige Sicherheitsschaltvorrichtungen sind in den Figuren nicht dargestellt.

Fig. 6 zeigt nun in Schnittansicht ein Lichtquellenmodul 1, das in einem Fahrzeugscheinwerfer 2 angeordnet ist. Dabei handelt es sich um das Lichtquellenmodul 1 gemäß Fig. 1. Der Fahrzeugscheinwerfer 2 weist einen Reflektor 6 auf, in den das Lichtquellenmodul 1 einbringbar ist. Das Lichtquellenmodul 1 ist so ausgeführt, dass im montierten Zustand das Leuchtelement 4 in einem Brennpunkt des Reflektors 6 angeordnet ist. So lässt sich eine optimale Ausnutzung des vom Leuchtelement 4 ausgestrahlten Lichts sicherstellen. Im dargestellten Ausführungsbeispiel ist das Lichtquellenmodul 1 so montiert, dass das der Laserlichtquelle 3 zugeordnete Kühlelement 15 außerhalb des Reflektors 6 angeordnet ist. Da das Kühlelement 15 wärmeleitend mit dem Trägerelement 5 verbunden ist, wird dadurch eine optimale Ableitung der Wärme aus dem Reflektor 6 heraus sichergestellt.

Wie in Fig. 6 erkennbar ist, wird durch die lichtundurchlässige Reflexionsschicht 8 des Optikelements 9 sichergestellt, dass kein Licht in Hauptabstrahlrichtung 100 des Fahrzeugscheinwerfers 2 abgestrahlt wird und auch das Laserlicht nicht in diese Richtung entweichen kann. Dies ist auch sichergestellt, wenn das Leuchtelement 4 nicht mehr an seinem Platz ist. In Fig. 6 ist erkennbar, dass in Hauptabstrahlrichtung 100 des Fahrzeugscheinwerfers 2 Licht sowohl direkt vom Leuchtelement 4 über den Reflektor 6 abgestrahlt wird ("A" in Fig. 6) als auch Licht, das vom Leuchtelement 4 über die Reflexionsschicht 8 des Optikelements 9 zum Reflektor 6 des Fahrzeugscheinwerfers 2 umgelenkt wird ("B" in Fig. 6).

In Fig. 6 ist weiters gezeigt, dass die Mittel zur lösbaren Montage des Lichtquellenmoduls 1 in dem Scheinwerfer 2 Referenzmittel umfassen kann, die im vorliegenden Ausführungsbeispiel als Passstifte ausgebildet sind, die mit Passlöchern zusammenwirken. Genauer gesagt, sind einerseits an einem mit dem Trägerelement 5 des Lichtquellenmoduls 1 einstückigen Flansch Passstifte 5' und Passlöcher 5" und andererseits an einem Flansch des Reflektors 6 des Scheinwerfers 2 Passlöcher 6" und Passstifte 6' vorhanden. Im vorliegenden Fall ist ein Passstift 5' am Modul 1 bzw. dem Trägerelement 5 und ein Passstift 6' am Scheinwerfer 2 vorgesehen, doch sind selbstverständlich andere Ausführungen möglich, bei welchen z.B. an dem Lichtquellenmodul 1 ausschließlich Passstifte und an dem Scheinwerfer ausschließlich Passlöcher ausgebildet sind bzw. umgekehrt.

Zusätzlich zu den Referenzmitteln, hier den Passstiften und den Passlöchern können natürlich noch weitere Mittel zur lösbaren Montage vorgesehen sein, wie Klammern, Schnappverbindungen etc.

Eine weitere Variante eines in einem Fahrzeugscheinwerfer 2 verbauten Lichtquellenmoduls 1 gemäß der Ausführungsform in Fig. 4 ist in einer perspektivischen Ansicht in Fig. 7 dargestellt. Darin ist das Lichtquellenmodul 1 in einem Reflektor 6 angeordnet, wobei neben dem Lichtquellenmodul 1 Designelemente 20 vorgesehen sind.

Das Lichtquellenmodul 1 wird in beiden dargestellten Varianten entlang der Hauptachse 300 (nur in Fig. 6 dargestellt) des Reflektors 6 eingeführt und mit Mitteln zur lösbaren Montage verankert - dabei kann es sich beispielsweise um Rastelemente handeln, die mit entsprechenden Rastaufnahmen im Reflektor 6 zusammenwirken. Die Mittel zur lösbaren Montage des Lichtquellenmoduls 1 sind bevorzugt an dessen Trägerelement 5 angeordnet. Aus dem Stand der Technik ist eine Vielzahl solcher Lösungen bekannt, die daher hier nicht näher ausgeführt werden.

Um sicherzustellen, dass beim Einbau bzw. bei einem Wechsel des Lichtquellenmoduls 1 die optimale Positionierung des Moduls bzw. seines Leuchtelements 4 sichergestellt sind, weisen das Lichtquellenmodul 1 und/oder die Laserlichtquelle 3 Referenzmittel zum Referenzieren des Lichtquellenmoduls 1 und/oder der Laserlichtquelle 3 im Fahrzeugscheinwerfer 2 bzw. in dessen Reflektor 6 auf.

Die Referenzmittel können verschieden ausgeführt sein - beispielsweise kann es sich gemäß einer ersten Variante um Führungsvorrichtungen handeln, die mit entsprechenden Führungsaufnahmevorrichtungen im Fahrzeugscheinwerfer 2 bzw. in dessen Reflektor 6 oder Reflektoradapter zusammenwirken. Dazu können in der Öffnung, durch die das Lichtquellenmodul 1 in den Fahrzeugscheinwerfer 2 eingebracht wird, Schienen vorgesehen sein, die mit entsprechenden Schlitzen am Lichtquellenmodul 1 zusammenwirken und dieses bis z.B. zu einem Rastanschlag führen. Derartige Lösungen sind im Stand der Technik bekannt und hier deshalb nicht näher ausgeführt.

In einer Variante sind die Referenzmittel als auf der Laserlichtquelle 3 und/oder dem Trägerelement 4 ausgeführte Referenzebene mit zumindest drei Auflageflächen ausgeführt, die mit entsprechenden Auflagenflächenaufnahmen am Fahrzeugscheinwerfer 1, insbesondere am Reflektor 6 eines Fahrzeugscheinwerfers 1, zusammenwirken.

## Patentansprüche

1. Lichtquellenmodul (1) für einen Fahrzeugscheinwerfer (2), wobei das Lichtquellenmodul (1) zumindest eine Laserlichtquelle (3) und zumindest ein durch Beleuchtung mit Laserlicht zur Ausstrahlung von sichtbarem Licht anregbares Leuchtelement (4), das durch die Laserlichtquelle (3) bestrahlbar ist, aufweist, wobei die Laserlichtquelle (3) und das Leuchtelement (4) zueinander beabstandet auf einem Trägerelement (5) angeordnet sind, wobei das Leuchtelement (4) derart auf dem Trägerelement (5) angeordnet ist, dass es im montierten Zustand in einem Brennpunkt eines Reflektors (6) des Fahrzeugscheinwerfers (2) anordenbar ist, **dadurch gekennzeichnet, dass** das Lichtquellenmodul (1) an dem Trägerelement (5) angeordnete Mittel (5', 6'; 5", 6") zur lösbaren Montage in dem Fahrzeugscheinwerfer (2) aufweist und das Trägerelement (5) zumindest eine Trägerbasis (50) mit zumindest einer Laserlichtquelle (3) und zumindest einen von der Trägerbasis (50) ausgehenden Trägerarm (51) mit zumindest einem Leuchtelement (4) aufweist, und der Trägerarm (51) von der Trägerbasis (50) ausgehend U-förmig ausgeführt ist, wobei das zumindest eine Leuchtelement (4) an der von der Trägerbasis (50) am weitesten entfernten Stelle auf der der Laserlichtquelle (3) zugewandten Seite des Trägerarms (51) angeordnet ist.

2. Lichtquellenmodul (1) nach Anspruch 1, **dadurch gekennzeichnet, dass** die Mittel zur lösbaren Montage Referenzmittel (5', 6'; 5", 6") zum Referenzieren des Lichtquellenmoduls (1) und/oder der Laserlichtquelle (3) in einem Fahrzeugscheinwerfer (2), insbesondere einem Reflektor (6) eines Fahrzeugscheinwerfers (2), umfassen.

3. Lichtquellenmodul (1) nach Anspruch 2, **dadurch gekennzeichnet, dass** die Referenzmittel als mit entsprechenden Führungsaufnahmevorrichtungen in einem Fahrzeugscheinwerfer (2), insbesondere einem Reflektor (6) eines Fahrzeugscheinwerfers (2), zusammenwirkende Führungsvorrichtungen ausgeführt sind.

4. Lichtquellenmodul (1) nach Anspruch 2, **dadurch gekennzeichnet, dass** die Referenzmittel als auf der Laserlichtquelle (3) und/oder dem Trägerelement (4) ausgeführte Referenzebene mit zumindest drei Auflageflächen ausgeführt sind, die mit entsprechenden Auflageflächenaufnahmen am Fahrzeugscheinwerfer (2), insbesondere am Reflektor (6) eines Fahrzeugscheinwerfers (2), zusammenwirken.

5. Lichtquellenmodul (1) nach Anspruch 2 oder 3, **dadurch gekennzeichnet, dass** die Referenzmittel als zumindest ein Passstift und zumindest ein Passloch ausgeführt sind, wobei der Passstift auf der Laserlichtquelle (3) und/oder dem Trägerelement (5) angeordnet sind und das Passloch auf einem Fahrzeugscheinwerfer (2) angeordnet ist, oder umgekehrt.

6. Lichtquellenmodul (1) nach einem der Ansprüche 1 bis 5, **dadurch gekennzeichnet, dass** das Trägerelement (5) aus einem wärmeleitenden Material und/oder zumindest teilweise aus einem transparenten Material gefertigt ist.

7. Lichtquellenmodul (1) nach einem der Ansprüche 1 bis 6, **dadurch gekennzeichnet, dass** auf der von der Laserlichtquelle (3) abgewandten Seite des Leuchtelements (4) ein auf dem Trägerelement (5) angeordnetes Konzentratoroptikelement (7) vorgesehen ist, welches das Leuchtelement (4) im montierten Zustand in Hauptabstrahlrichtung (100) des Fahrzeugscheinwerfers (2) abschirmt und/oder auf seiner dem Leuchtelement (4) zugewandten Seite eine Reflexionsschicht (8) aufweist.

8. Lichtquellenmodul (1) nach einem der Ansprüche 1 bis 9, **dadurch gekennzeichnet, dass** das Leuchtelement (4) in einem auf dem Trägerelement (5) angeordnetem Optikelement (9), bevorzugt in einem Sackloch (10) oder in einer Höhlung, angeordnet ist, wobei dem Optikelement (9) zumindest auf einer von der Laserlichtquelle (3) abgewandten Seite zumindest eine, Licht in Richtung der Laserlichtquelle (3) reflektierende Reflexionsschicht (8) und/oder zumindest eine lichtundurchlässige Absorptionsschicht (12) zugeordnet ist.

9. Lichtquellenmodul (1) nach Anspruch 8, **dadurch gekennzeichnet, dass** die der Laserlichtquelle (3) zugewandte Seite des Optikelements (9) zumindest teilweise, insbesondere aber in einem Bereich unter einer durch das Leuchtelement (4) verlaufenden Horizontalebene (200), von einer lichtundurchlässigen Blendenvorrichtung (13), beispielsweise in Form einer lichtundurchlässigen Beschichtung, bedeckt ist.

10. Lichtquellenmodul (1) nach einem der Ansprüche 1 bis 9, **dadurch gekennzeichnet, dass** zwischen der Laserlichtquelle (3) und dem Leuchtelement (4) zumindest ein Lichtleitelement (14) angeordnet ist.

11. Lichtquellenmodul (1) nach einem der Ansprüche 1 bis 10, **dadurch gekennzeichnet, dass** die Laserlichtquelle (3) mit zumindest einem Kühlelement (15) verbunden ist, das insbesondere als Kühlkörper und/oder Belüftungsvorrichtung ausgeführt ist.

12. Lichtquellenmodul (1) nach Anspruch 11, **dadurch gekennzeichnet, dass** das mit der Laserlichtquelle (3) verbundene Kühlelement (15) auf dem Trägerelement (5) angeordnet ist.

13. Lichtquellenmodul (1) nach einem der Ansprüche 1 bis 12, **dadurch gekennzeichnet, dass** auf dem Trägerelement (5) zumindest ein Sensorelement (16) zur Erkennung einer Fehlfunktion der Laserlichtquelle (3) und/oder des Trägerelements (5) angeordnet ist.

14. Lichtquellenmodul (1) nach Anspruch 13, **dadurch gekennzeichnet, dass** es sich bei dem Sensorelement (16) um zumindest eine der folgenden Sensorvorrichtungen handelt: optischer Sensor zur Detektion einer Abweichung des von der Laserlichtquelle (3) ausgestrahlten Laserlichts von der ordnungsgemäßen Strahlrichtung; optischer Sensor zur Detektion von Fehlfunktionen des Leuchtelements (4); mechanischer Sensor zur Detektion einer Beschädigung des Trägerelements (5) und/oder des Leuchtelements (4) und/oder des Optikelements (9) und/oder des Konzentratoroptikelements (7).

15. Lichtquellenmodul (1) nach einem der Ansprüche 1 bis 14, **dadurch gekennzeichnet, dass** das Trägerelement (5) in dem Bereich um das Leuchtelement (4) einen Absorberbereich (18) mit einer absorbierenden bzw. nicht-reflektierenden Oberfläche aufweist.

16. Lichtquellenmodul (1) nach einem der Ansprüche 1 bis 15, **dadurch gekennzeichnet, dass** das Lichtquellenmodul (1) zumindest eine Sicherheitsschaltvorrichtung aufweist, die ein Aktivieren des Lichtquellenmoduls (1) bzw. der Laserlichtquelle (3) des Lichtquellenmoduls (1) vor erfolgtem Einbau des Lichtquellenmoduls (1) in einen Fahrzeugscheinwerfer (2) unterbindet.

17. Fahrzeugscheinwerfer (2) mit zumindest einem Lichtquellenmodul (1) nach einem der Ansprüche 1 bis 16.

18. Fahrzeugscheinwerfer (2) nach Anspruch 17, **dadurch gekennzeichnet, dass** zumindest ein Reflektor (6) oder Reflektoradapter mit zumindest einer Aufnahme für das Lichtquellenmodul (1) vorgesehen ist.

## Claims

1. Light source module (1) for a vehicle headlamp (2), the light source module (1) having at least one laser light source (3) and at least one light element (4) which can be excited to emit visible light upon illumination with laser light and can be irradiated by the laser light source (3), the laser light source (3) and the light element (4) being arranged on a support element (5) at a distance from one another, the light element (4) being arranged on the support element (5) such that in the mounted state, it is positionable in a focal point of a reflector (6) of the vehicle headlamp (2), **characterized in that** the light source module (1) comprises means (5', 6'; 5", 6") arranged on the support element (5) for detachable mounting in the vehicle headlamp (2), and the support element (5) has at least one support base (50) with at least one laser light source (3) and at least one support arm (51) extending from the support base (50), the support arm having at least one light element (4) and being U-shaped starting from the support base (50), the at least one light element (4) being arranged at the point furthest away from the support base (50) on the side of the support arm (51) facing the laser light source (3).

2. Light source module (1) according to claim 1, **characterized in that** the means for detachable mounting comprise reference means (5', 6'; 5", 6") for referencing the light source module (1) and/or the laser light source (3) in a vehicle headlamp (2), in particular a reflector (6) of a vehicle headlamp (2).

3. Light source module (1) according to claim 2, **characterized in that** the reference means are realized as guiding devices cooperating with corresponding guide receiving devices in a vehicle headlamp (2), in particular a reflector (6) of a vehicle headlamp (2).

4. Light source module (1) according to claim 2, **characterized in that** the reference means are realized as a reference plane implemented on the laser light source (3) and/or the support element (4), and having at least three supporting surfaces which interact with corresponding supporting surface receptacles on the vehicle headlamp (2), in particular on the reflector (6) of a vehicle headlamp (2).

5. Light source module (1) according to claim 2 or 3, **characterized in that** the reference means are designed as at least one locating pin and at least one locating hole, the locating pin being arranged on the laser light source (3) and/or the support element (5) and the locating hole being arranged on a vehicle headlamp (2), or vice versa.

6. Light source module (1) according to any one of claims 1 to 5, **characterized in that** the support element (5) is made of a heat-conducting material and/or at least partially of a transparent material.

7. Light source module (1) according to any one of claims 1 to 6, **characterized in that** the side of the light element (4) facing away from the laser light source (3) is provided with a concentrator optical element (7) arranged on the support element (5), said concentrator optical element (7) shielding the light element (4) in the mounted state in the main radiation direction (100) of the vehicle headlamp (2) and/or having a reflection layer (8) on its side facing the light element (4).

8. Light source module (1) according to any one of claims 1 to 9, **characterized in that** the light element (4) is arranged in an optical element (9) arranged on the support element (5), preferably in a blind hole (10) or in a cavity, the optical element (9) being associated, at least on a side facing away from the laser light source (3), with at least one reflection layer (8) reflecting light in the direction of the laser light source (3) and/or at least one opaque absorption layer (12).

9. Light source module (1) according to claim 8, **characterized in that** the side of the optical element (9) facing the laser light source (3) is covered at least partially, but in particular in a region below a horizontal plane (200) extending through the optical element (4), by an opaque diaphragm device (13), realized for example as an opaque coating.

10. Light source module (1) according to any one of claims 1 to 9, **characterized in that** at least one light guide element (14) is arranged between the laser light source (3) and the light element (4).

11. Light source module (1) according to any one of claims 1 to 10, **characterized in that** the laser light source (3) is connected to at least one cooling element (15), which is preferably realized as heat sink and/or ventilation device.

12. Light source module (1) according to claim 11, **characterized in that** the cooling element (15) connected to the laser light source (3) is arranged on the support element (5).

13. Light source module (1) according to any one of claims 1 to 12, **characterized in that** the support element (5) is provided with at least one sensor element (16) for detecting a malfunction of the laser light source (3) and/or of the support element (5).

14. Light source module (1) according to claim 13, **characterized in that** the sensor element (16) is at least one of the following sensor devices: optical sensor for detecting a deviation of the laser light emitted by the laser light source (3) from the proper beam direction; optical sensor for detecting malfunctions of the light element (4); mechanical sensor for detecting damage to the support element (5) and/or the light element (4) and/or the optical element (9) and/or the concentrator optical element (7).

15. Light source module (1) according to any one of claims 1 to 14, **characterized in that** the support element (5) has an absorber region (18) with an absorbing or non-reflecting surface in the region around the light element (4).

16. Light source module (1) according to any one of claims 1 to 15, **characterized in that** the light source module (1) has at least one safety switching device which prevents activation of the light source module (1) or of the laser light source (3) of the light source module (1) before the light source module (1) has been installed in a vehicle headlamp (2).

17. Vehicle headlamp (2) comprising at least one light source module (1) according to any one of claims 1 to 16.

18. Vehicle headlamp (2) according to claim 17, **characterized in that** at least one reflector (6) or reflector adapter with at least one receptacle for the light source module (1) is provided.

## Revendications

1. Module de source lumineuse (1) pour un phare de véhicule (2), le module de source lumineuse (1) comportant au moins une source de lumière laser (3) et au moins un élément lumineux (4) qui peut être excité par éclairage à la lumière laser pour émettre de la lumière visible et qui peut être irradié par la source de lumière laser (3), la source de lumière laser (3) et l'élément lumineux (4) étant disposés à distance l'un de l'autre sur un élément porteur (5), l'élément lumineux (4) étant disposé sur l'élément porteur (5) de telle sorte qu'à l'état monté, il peut être disposé dans un foyer d'un réflecteur (6) du phare (2) du véhicule, **caractérisé en ce que** le module de source de lumière (1) comporte des moyens (5', 6'; 5", 6") disposés sur l'élément de support (5) pour le montage amovible dans le phare (2) du véhicule et l'élément de support (5) comporte au moins une base de support (50) avec au moins une source de lumière laser (3) et au moins un bras de support (51) s'étendant à partir de la base de support (50) et ayant au moins un élément lumineux (4), et le bras de support (51) est en forme de U à partir de la base de support (50), ledit au moins un élément lumineux (4) étant disposé au point le plus éloigné de la base de support (50) sur le côté du bras de support (51) tourné vers la source de lumière laser (3).

2. Module de source lumineuse (1) selon la revendication 1, **caractérisé en ce que** les moyens de montage amovible comprennent des moyens de référence (5', 6' ; 5", 6") pour référencer le module de source lumineuse (1) et/ou la source de lumière laser (3) dans un phare de véhicule (2), en particulier un réflecteur (6) d'un phare de véhicule (2).

3. Module de source lumineuse (1) selon la revendication 2, **caractérisé en ce que** les moyens de référence sont conçus comme des moyens de guidage coopérant avec des moyens de réception de guidage correspondants dans un phare de véhicule (2), en particulier un réflecteur (6) d'un phare de véhicule (2).

4. Module de source lumineuse (1) selon la revendication 2, **caractérisé en ce que** les moyens de référence sont conçus comme un plan de référence réalisé sur la source lumineuse laser (3) et/ou l'élément porteur (4) avec au moins trois surfaces d'appui qui interagissent avec des logements de surface d'appui correspondants sur le projecteur de véhicule (2), en particulier sur le réflecteur (6) d'un projecteur de véhicule (2).

5. Module de source lumineuse (1) selon la revendication 2 ou 3, **caractérisé en ce que** les moyens de référence sont conçus comme au moins une broche de positionnement et au moins un trou de positionnement, la broche de positionnement étant disposée sur la source lumineuse laser (3) et/ou l'élément de support (5) et le trou de positionnement étant disposé sur un phare de véhicule (2), ou inversement.

6. Module de source lumineuse (1) selon l'une quelconque des revendications 1 à 5, **caractérisé en ce que** l'élément porteur (5) est constitué d'un matériau conducteur de la chaleur et/ou au moins partiellement d'un matériau transparent.

7. Module de source lumineuse (1) selon l'une quelconque des revendications 1 à 6, **caractérisé en ce que** sur le côté de l'élément lumineux (4) opposé à la source de lumière laser (3) est prévu un élément optique concentrateur (7) disposé sur l'élément porteur (5), qui, à l'état monté, protège l'élément lumineux (4) dans la direction principale de rayonnement (100) du phare (2) du véhicule et/ou comporte une couche réfléchissante (8) sur son côté tourné vers l'élément lumineux (4).

8. Module de source lumineuse (1) selon l'une quelconque des revendications 1 à 9, **caractérisé en ce que** l'élément lumineux (4) est disposé dans un élément optique (9) disposé sur l'élément de support (5), de préférence dans un trou borgne (10) ou dans une cavité, au moins sur un côté opposé à la source de lumière laser (3) étant associée à l'élément optique (9) au moins une couche de réflexion (8) réfléchissant la lumière en direction de la source de lumière laser (3) et/ou au moins une couche d'absorption opaque (12).

9. Module de source de lumière (1) selon la revendication 8, **caractérisé en ce que** le côté de l'élément optique (9) tourné vers la source de lumière laser (3) est recouvert au moins partiellement, mais en particulier dans une zone située en dessous d'un plan horizontal (200) passant par l'élément optique (4), par un dispositif de diaphragme opaque (13), par exemple sous la forme d'un revêtement opaque.

10. Module de source lumineuse (1) selon l'une quelconque des revendications 1 à 9, **caractérisé en ce qu'**au moins un élément de guidage de la lumière (14) est disposé entre la source de lumière laser (3) et l'élément lumineux (4).

11. Module de source lumineuse (1) selon l'une quelconque des revendications 1 à 10, **caractérisé en ce que** la source lumineuse laser (3) est reliée à au moins un élément de refroidissement (15), qui est conçu en particulier comme dissipateur thermique et/ou dispositif de ventilation.

12. Module de source lumineuse (1) selon la revendication 11, **caractérisé en ce que** l'élément de refroidissement (15) relié à la source de lumière laser (3) est disposé sur l'élément porteur (5).

13. Module de source lumineuse (1) selon l'une des revendications 1 à 12, **caractérisé en ce qu'**au moins un élément capteur (16) pour la détection d'un dysfonctionnement de la source lumineuse laser (3) et/ou de l'élément porteur (5) est disposé sur l'élément porteur (5).

14. Module de source de lumière (1) selon la revendication 13, **caractérisé en ce que** l'élément capteur (16) est au moins l'un des dispositifs capteurs suivants : capteur optique pour détecter un écart de la lumière laser émise par la source de lumière laser (3) par rapport à la direction de faisceau correcte ; capteur optique pour détecter des dysfonctionnements de l'élément lumineux (4) ; capteur mécanique pour détecter des dommages de l'élément porteur (5) et/ou de l'élément lumineux (4) et/ou de l'élément optique (9) et/ou de l'élément optique concentrateur (7).

15. Module de source lumineuse (1) selon l'une des revendications 1 à 14, **caractérisé en ce que** l'élément porteur (5) comporte une zone d'absorption (18) avec une surface absorbante ou non réfléchissante dans la zone autour de l'élément lumineux (4).

16. Module de source lumineuse (1) selon l'une des revendications 1 à 15, **caractérisé en ce que** le module de source lumineuse (1) comporte au moins un dispositif de commutation de sécurité qui empêche l'activation du module de source lumineuse (1) ou de la source de lumière laser (3) du module de source lumineuse (1) avant que le module de source lumineuse (1) ait été installé dans un phare de véhicule (2).

17. Projecteur de véhicule (2) comportant au moins un module de source lumineuse (1) selon l'une des revendications 1 à 16.

18. Projecteur de véhicule (2) selon la revendication 17, **caractérisé en ce qu'**il est prévu au moins un réflecteur (6) ou un adaptateur de réflecteur avec au moins un réceptacle pour le module de source lumineuse (1).
